# FASCICULE DE BREVET EUROPEEN

(11) **EP 0 418 116 B1**
(45) Date de publication et mention de la délivrance du brevet: **01.12.1993**
(21) Numéro de dépôt: 90402418.9
(22) Date de dépôt: 03.09.1990
(51) Int. Cl.: B60R 13/06

(54) **Armature métallique pour bande ou joint d'étanchéité, en particulier, dans l'industrie automobile**
Metallische Verstärkung für Leiste oder Dichtung, insbesondere für die Kraftfahrzeugindustrie
Metal reinforcement for strip or sealing joint, particularly for the automotive industry

(30) Priorité: 13.09.1989 FR 8911955
(43) Date de publication de la demande: 20.03.1991
(73) Titulaire: HUTCHINSON S.A. une Société Anonyme dotée d'un Conseil de Surveillance et d'un Directoire, F-75008 Paris (FR)
(72) Inventeur: Guillon, Henri, F-45700 Le Bois, St. Maurice Sur Fessard (FR)
(74) Mandataire: Orès, Bernard

(56) Documents cités:
- FR-A- 2 033 026
- FR-A- 2 258 514

## Description

L'invention a pour objet une armature métallique pour bande ou joint d'étanchéité utilisable en particulier dans le domaine de l'industrie automobile et, notamment, pour la fabrication de guides, coulisses, lécheurs de bas de vitre, ou glace d'automobile, ... etc, ainsi que les joints d'étanchéité comme des guides, coulisses, lécheurs, ... etc comportant de telles armatures.

On connaît déjà, par exemple par FR-A-2 435 644, une réalisation d'armature pour de tels bandes ou joints d'étanchéité qui est formée d'une série d'éléments adjacents reliés les uns aux autres par de courtes barrettes, d'autres réalisations étant connues, par exemple, par FR-A-2 389 052, FR-A-2 352 942, FR-A-2 033 026, FR-A-2 258 514, ou EP-A-0 252 659, ... etc. Cependant, ces armatures connues ne sont pas entièrement satisfaisantes d'une part, parce que leur compressibilité est extrèmement faible et, d'autre part, parce qu'elles restent susceptibles d'un étirage prohibitif pour peu que l'effort de traction ne soit pas dirigé suivant une direction prédéterminée.

Or les impératifs de rationalisation des opérations de montage des joints d'étanchéité, de même que des coulisses, lécheurs, ... etc, ont amené les constructeurs d'automobiles à abandonner la coupe après montage du joint et à n'utiliser que des joints, coulisses, lécheurs, précoupés à la longueur requise, mis en place par compression, ce qui présente outre un avantage de coût, également l'avantage d'un meilleur maintien en place du joint ou guide sur le pourtour de la baie qu'il équipe.

L'invention a précisément pour but de fournir une armature du type précité, exempte des inconvénients des dispositifs connus, présentant de bonnes caractéristiques de traction-compression avec une forte compressibilité et une extensibilité faible comparée à sa compressibilité, tout en étant de fabrication simple et économique.

L'invention a donc pour objet une armature métallique pour bande ou joint d'étanchéité, utilisable en particulier dans le domaine de l'industrie automobile et, notamment, pour la fabrication d'organes comme des guides, coulisses, lécheurs de bas de vitre ou de glace d'automobile, etc..., armature conformée suivant un U dans sa condition opératoire et comprenant une succession d'éléments placés à distance les uns des autres et reliés les uns aux autres, chaque élément étant constitué par deux bandes sensiblement parallèles qui s'étendent transversalement à la direction longitudinale moyenne de l'armature et qui sont réunies entre elles par des entretoises, chaque élément étant relié à un élément adjacent par une barrette placée sensiblement au voisinage des parties médianes des bandes transversales (Armature du type divulguée, par exemple par FR-A-2 435 644 ou FR-A-2 033 026), caractérisée en ce que les entretoises et les barrettes sont inclinées les unes et les autres sur la direction longitudinale moyenne de l'armature mais, toutefois, suivant des angles opposés, deux entretoises d'un même élément étant situées dans des plans parallèles au plan de symétrie de l'armature et étant anti-parallèles par rapport à un plan parallèle à la base du profilé en U de chaque élément.

Dans une forme de réalisation préférée de l'invention, une première entretoise reliant deux bandes constitutives d'un élément est prévue entre l'extrémité d'une première bande et une zone intermédiaire d'une seconde bande, la seconde entretoise reliant les deux dites bandes de l'élément étant prévue entre une extrémité de la seconde bande et une partie intermédiaire de la première bande.

Vu en plan, et avant que l'armature ne soit conformée en U pour être incorporée dans la bande, joint d'étanchéité, guide, coulisse, lécheur, etc..., qu'elle est destinée à équiper, chaque élément à deux bandes parallèles et entretoises reliant lesdites bandes dessine quelque peu un motif à deux N accolés par leurs jambages
et à symétrie ponctuelle par rapport à un point du plan longitudinal moyen de l'armature.

Dans une forme de réalisation préférée, l'angle formé par les entretoises et les bandes est de l'ordre de 30° et c'est un angle de même valeur, mais d'inclinaison opposée, qui est celui régnant entre les barrettes et les bandes de deux éléments adjacents.

L'invention a aussi pour objet un flan en métal ou autre matériau présentant des caractéristiques mécaniques analogues, notamment en traction-compression et flexion, façonné pour former, après pliage, une armature telle que définie ci-dessus se présentant sous forme de paires de bandes réunies entre elles par des entretoises pour constituer des éléments reliés entre eux par des barrettes parallèles entre elles, caractérisé en ce que lesdites entretoises, qui sont parallèles entre elles, sont inclinées par rapport à la direction longitudinale des bandes et en ce que les barrettes sont aussi inclinées par rapport à cette direction longitudinale, mais en sens opposé des entretoises.

Suivant une caractéristique de l'invention, lesdites bandes sont à contour plan sensiblement rectangulaire et les angles que font les barrettes avec l'axe longitudinal moyen du flan est de préférence de l'ordre de 30°.

L'invention a également pour objet une bande ou joint d'étanchéité, utilisable en particulier dans le domaine de l'industrie automobile, comme une coulisse, un lécheur de bas de glace, ...etc comportant une armature métallique telle que définie ci-dessus.

D'autres caractéristiques de l'invention apparaîtront de la description qui suit, faite à titre d'exemple et en référence au dessin annexé dans lequel :
- la figure 1 est une vue en plan d'un flan d'armature pour joint d'étanchéité suivant l'invention ;
- les figures 2A et 2B sont des vues en coupes transversales par deux plans parallèles marqués A-A et B-B de l'armature de la figure 1 ;
- la figure 3 est une vue en perspective de l'armature métallique seule, mise en forme avant son incorporation dans un joint d'étanchéité ;
- la figure 4 est une vue en perspective très schématique d'un joint d'étanchéité à armature métallique suivant l'invention.

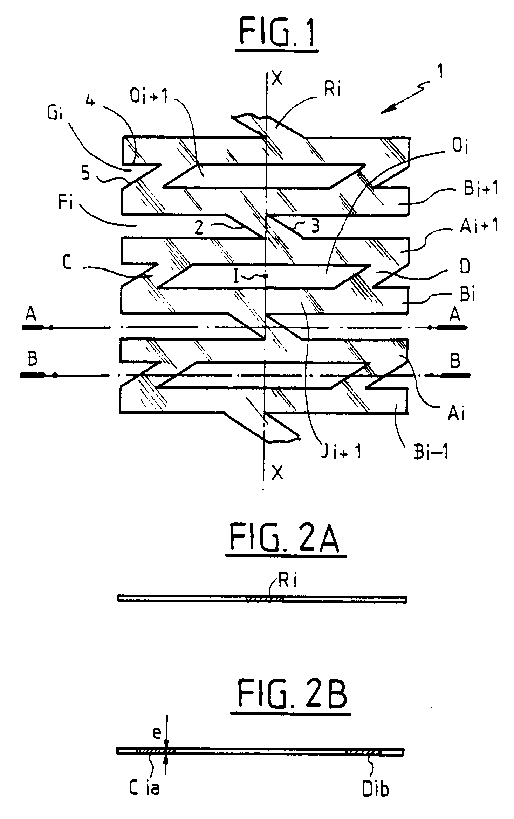

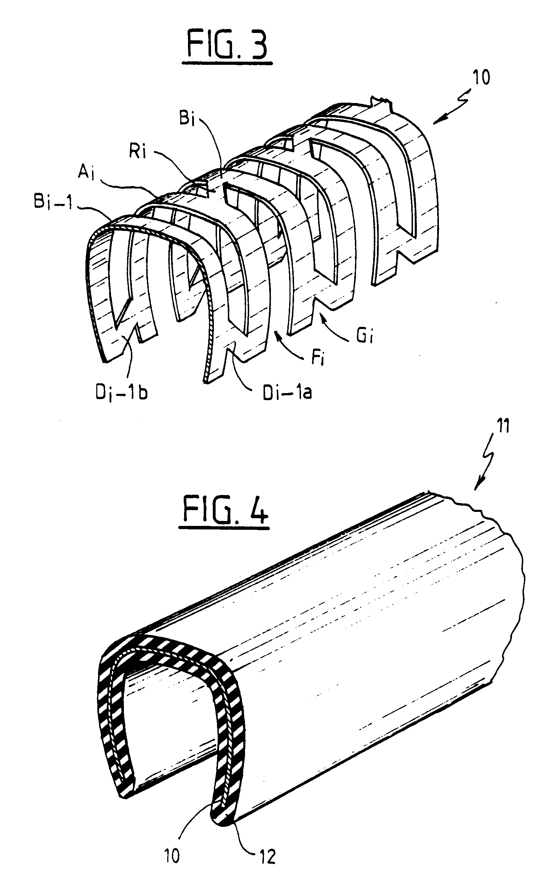

On se réfère d'abord à la figure 1 qui montre une feuille ou flan en métal ou autre matériau présentant des caractéristiques mécaniques analogues, désigné dans son ensemble par la référence 1, et de faible épaisseur e pour former, après pliage en U autour de deux axes parallèles à la trace XX de son plan de symétrie et symétriquement par rapport à celui-ci, l'armature des figures 3 et 4. Le flan 1 selon l'invention, obtenu par exemple par estampage ou à la presse à découper à partir d'une feuille pleine est conformé comme illustré sur la figure 1 , c'est-à-dire pour présenter:
· des paires de bandes métalliques, Ai, Bi (i = 1, 2,...,n), s'étendant perpendiculairement à l'axe XX, de forme générale rectangulaire, vues en plan ;
· une première série d'entretoises parallèles les unes aux autres, Ci, inclinées sur les bandes A, B d'environ 30° et reliant par paires deux bandes A et B ;
· une seconde série d'entretoises, Di, parallèles les unes aux autres, de même inclinaison sur les bandes AB que les entretoises Ci et qui relient également, par paires, deux bandes A et B ; et
· des barrettes Ri parallèles les unes aux autres inclinées sur les bandes A et B d'environ 30° également, mais suivant une inclinaison opposée à celle des entretoises C et D, les barrettes R reliant la bande Bi d'un élément formé par une paire de bandes A, B à la bande Ai + 1 de l'élément adjacent de la succession d'éléments.

Comme bien visible sur la figure 1, les barrettes Ri relient des bandes de deux éléments adjacents sensiblement dans la zone médiane desdites bandes, tandis que les entretoises C et D relient les bandes A et B d'un même élément en étant prévues entre l'extrémité d'une première bande Bi et une zone intermédiaire d'une seconde bande Ai + 1 et entre une extrémité de la seconde bande Ai + 1 et une partie intermédiaire de la première bande Bi.

Vu en plan, et avant que l'armature ne soit conformée en U pour être incorporée dans la bande, joint d'étanchéité, coulisse, lécheur, ... etc, comme il sera précisé ci-après, chaque élément formé de deux bandes Ai+1 et Bi se présente ainsi quelque peu suivant un motif à deux N accolés par leurs jambages ji et ji+1, et à symétrie ponctuelle par rapport à un point I situé dans le plan longitudinal moyen XX de l'armature.

A cette définition de la structure de l'armature par des éléments pleins du flan 1, correspond également une définition par des évidements constitués par des ouvertures Oi (i = 1, 2...) régulièrement espacées le long de l'axe XX, en forme de parallèlogrammes allongés dans la direction perpendiculaire à l'axe XX, dont les grands côtés sont perpendiculaires à l'axe XX et les petits côtés inclinés sur les grands côtés d'un angle de l'ordre de 30° ; outre ces ouvertures, le flan 1 présente également :
· une première série de paire de découpes ou fentes, Fi, alignées parallèlement aux ouvertures Oi, en forme de trapèzes rectangles débouchant sur les bords longitudinaux du flan et qui sont limitées par les bords parallèles 2 et 3 des barrettes Ri ;
· une seconde série de paires de découpes Gi, en forme de triangles rectangles, de plus courte hauteur que les découpes Fi et qui, débouchant sur les bords longitudinaux du flan en étant limitées chacune par un bord 4 d'une bande A et B, -ainsi perpendiculaire à la direction de l'axe XX-, et un bord 5 d'une entretoise C ou D.

Pour la réalisation d'une armature 10, figure 3, à partir du flan illustré sur les figures 1 et 2, ledit flan est plié suivant un profil général en U, de sorte que si les barrettes Ri demeurent parallèles entre elles, les deux entretoises Ci et Di d'un même élément sont maintenant situées dans des plans parallèles au plan de symétrie de l'armature et sont antiparallèles par rapport à un plan parallèle à la base du U.

Pour la fabrication, à partir de l'armature 10, d'un joint 11, illustré très schématiquement figure 4, et qui peut être un guide, une coulisse de guidage de glace ou vitre d'automobile, un lécheur de bas de glace de vitre d'automobile, ... etc, l'armature 10 est alors enrobée par du caoutchouc 12 ou un autre élastomère, ou un mélange de matériaux élastomères, généralement et le plus simplement par un processus d'extrusion ou analogue en soi connu et qui n'est donc pas décrit ici.

Un joint selon l'invention, obtenu à l'aide de l'armature telle que décrite ci-dessus, peut alors être comprimé au montage, de sorte que celui-ci peut être réalisé en positionnant d'abord sur le pourtour de la baie que le joint est destiné à équiper les deux extrémités du joint coupé à une longueur très légèrement supérieure à la longueur périphérique de la baie, puis en tirant partie de la compression autorisée par l'armature pour la mise en place définitive. La présence des barrettes et entretoises obliques qui donnent à l'armature une compression plus facile que son extension, permet alors d'obtenir un montage satisfaisant, qui ne nécessite pas d'opération de reprise et à la fin duquel le joint épouse de façon tout à fait satisfaisante la périphérie de la baie qu'il équipe, même si cette dernière présente une forme avec de faibles rayons de courbure.

## Revendications

1. Armature métallique pour bande ou joint d'étanchéité, utilisable en particulier dans le domaine de l'industrie automobile et, notamment, pour la fabrication d'organes comme des guides, coulisses, lécheurs de bas de vitre ou de glace d'automobile, etc..., armature conformée suivant un U dans sa condition opératoire et comprenant une succession d'éléments (Ai, Bi-1) placés à distance les uns des autres et reliés les uns aux autres, chaque élément étant constitué par deux bandes (Ai, Bi-1) sensiblement parallèles qui s'étendent transversalement à la direction longitudinale moyenne de l'armature (XX) et qui sont réunies entre elles par des entretoises (Ci, Di), chaque élément étant relié à un élément adjacent par une barrette (Ri) placée sensiblement au voisinage des parties médianes des bandes transversales (Ai, Bi-1), caractérisée en ce que les entretoises (Ci, Di) et les barrettes (Ri) sont inclinées les unes et les autres sur la direction longitudinale moyenne de l'armature (XX) mais, toutefois, suivant des angles opposés, deux entretoises (Ci, Di) d'un même élément étant situées dans des plans parallèles au plan de symétrie de l'armature et étant anti-parallèles par rapport à un plan parallèle à la base du profilé en U de chaque élément.

2. Armature suivant la revendication 1, caractérisée en ce qu'une première entretoise (Ci) reliant deux bandes (A, B) constitutives d'un élément est prévue entre l'extrémité d'une première bande (Bi) et une zone intermédiaire d'une seconde bande (Ai+1) tandis que la seconde entretoise (Di) de l'élément est prévue entre une extrémité de la seconde bande (Ai+1) et une partie intermédiaire de la première bande (Bi).

3. Armature suivant la revendication 2, caractérisée en ce que vu en plan, et avant mise en forme, le flan (1) constitutif de l'armature dessine quelque peu un motif à deux N accolés par leurs jambages (j) et à symétrie ponctuelle par rapport à un point (I) du plan longitudinal moyen (XX) de l'armature.

4. Armature suivant l'une quelconque des revendications précédentes, caractérisée en ce que les angles d'inclinaison des barrettes (Ri) et des entretoises (C, D) sur l'axe (XX) longitudinal de l'armature sont de l'ordre de 30°.

5. Flan en métal ou autre matériau présentant des caractéristiques mécaniques analogues, notamment de traction compression et flexion, façonné pour former, après pliage, une armature suivant l'une quelconque des revendications précédentes, ledit flan se présentant sous la forme de paires de bandes (Ai, Bi) réunies entre elles par des entretoises pour constituer des éléments reliés entre eux par des barrettes parallèles entre elles, caractérisé en ce que lesdites entretoises, qui sont parallèles entre elles, sont inclinées par rapport à la direction longitudinale des bandes et en ce que les barrettes (Ri) sont aussi inclinées par rapport à cette direction longitudinale, mais en sens opposé des entretoises.

6. Flan suivant la revendication 5, dans lequel lesdites bandes (A, B) sont à contour plan sensiblement rectangulaire, caractérisé en ce que l'angle que font les barrettes (Ri) avec l'axe longitudinal moyen (XX) du flan (1) est de l'ordre de 30°.

7. Bande ou joint d'étanchéité, utilisable en particulier dans le domaine de l'industrie automobile, pour ménager un guide, une coulisse, un lécheur de bas de glace ou vitre d'automobile, etc..., caractérisé en ce qu'il comporte une armature suivant l'une quelconque des revendications 1 à 4.

## Patentansprüche

1. Metallische Armatur für ein Band oder einen Dichtung, das bzw. die insbesondere auf dem Gebiet der Kraftfahrzeugindustrie verwendbar ist, und hauptsächlich für die Herstellung von Organen wie Führungen, Kulissen, Abstreifern des Unterteils eines Fensters oder einer Scheibe eines Kraftfahrzeugs, ... etc., wobei die Armatur in ihrem Betriebszustand gemäß einem U gestaltet ist und eine Aufeinanderfolge von Elementen (Ai, Bi-1) umfaßt, die im Abstand voneinander angeordnet und miteinander verbunden sind, wobei jedes Element von zwei im wesentlichen parallelen Streifen (Ai, Bi-1) gebildet ist, die sich quer zur Längsmittelrichtung der Armatur (XX) erstrecken und die untereinander durch Laschen (Ci, Di) vereinigt sind, wobei jedes Element mit einem benachbarten Element durch einen Steg (Ri) verbunden ist, der im wesentlichen in der Nähe der mittleren Teile der Querstreifen (Ai, Bi-1) angeordnet ist, dadurch **gekennzeichnet,** daß die Laschen (Ci, Di) und die Stege (Ri) beide gegen die mittlere Längsrichtung der Armatur (XX) geneigt sind, aber gleichwohl gemäß entgegengesetzten Winkeln, wobei zwei Laschen (Ci, Di) eines gleichen Elements sich in Ebenen befinden, die parallel zur Symmetrieachse der Armatur sind, und antiparallel mit Bezug auf eine Ebene sind, die parallel zu der Basis des U-Profils jedes Elements ist.

2. Armatur nach Anspruch 1, dadurch **gekenn****zeichnet,** daß eine erste Lasche (Ci), die zwei Streifen (A, B), welche ein Element bilden, verbindet, zwischen dem Ende eines ersten Streifens (Bi) und einer Zwischenzone eines zweiten Streifens (Ai + 1) vorgesehen ist, während die zweite Lasche (Di) des Elements zwischen einem Ende des zweiten Streifens (Ai + 1) und einem Zwischenteil des ersten Streifens (Bi) vorgesehen ist.

3. Armatur nach Anspruch 2, dadurch **gekenn****zeichnet,** daß, in der Aufsicht gesehen und bevor er in Form gebracht wird, der Zuschnitt (1), der die Armatur bildet, ein wenig ein Motiv mit zwei N hervortreten läßt, die durch ihre Grundstriche (j) und punktsymmetrisch mit Bezug auf einen Punkt (I) der Längsmittel ebene (XX) der Armatur zusammengefügt sind.

4. Armatur nach irgendeinem der vorhergehenden Ansprüche, dadurch **gekennzeichnet,** daß die Neigungswinkel der Stege (Ri) und der Laschen (C, D) gegen die Längsachse (XX) der Armatur in der Größenordnung von 30° sind.

5. Zuschnitt aus Metall oder einem anderen Material, das analoge mechanische Eigenschaften aufweist, insbesondere des Zugs, der Kompression und der Biegung, der so gestaltet ist, daß er nach dem Biegen eine Armatur gemäß irgendeinem der vorhergehenden Ansprüche bildet, wobei sich der Zuschnitt in der Form von Paaren von Streifen (Ai, Bi) darbietet, die miteinander durch Laschen vereinigt sind, um Elemente zu bilden, die untereinander durch untereinander parallele Stege verbunden sind, dadurch **gekennzeichnet,** daß die Laschen, die untereinander parallel sind, mit Bezug auf die Längsrich- tung der Streifen geneigt sind, und daß die Stege (Ri), auch mit Bezug auf diese Längsrichtung geneigt sind, aber im entgegengesetzten Sinn zu den Laschen.

6. Zuschnitt nach Anspruch 5, in welchem die Streifen (A, B) in ebener Kontur im wesentlichen rechteckig sind, dadurch **gekennzeichnet,** daß der Winkel, welchen die Stege (Ri) mit der Längsmittelachse (XX) des Zuschnitts (1) bilden, in der Größenordnung von 30° ist.

7. Band oder Dichtung, das bzw. die insbesondere auf dem Gebiet der Kraftfahrzeugindustrie verwendbar ist, zum Vorsehen einer Führung, einer Kulisse, eines Abstreifers des Unterteils eines Fensters oder einer Scheibe eines Kraftfahrzeugs, ... etc., dadurch **gekennzeichnet,** daß es bzw. sie eine Armatur gemäß irgendeinem der Ansprüche 1 bis 4 hat.

## Claims

1. A metal reinforcement for a sealing gasket or strip, particularly for use in the motor industry and in particular, for the manufacture of members such as guides, slides, motor vehicle window bottom wipe-seals,... etc, the reinforcement being U-shaped in its operating condition and comprising a succession of elements (Ai, Bi-1) spaced apart from and connected to one another, each element being constituted by two substantially parallel strips (Ai, Bi-1) which extend in a direction transverse to the mean longitudinal direction of the reinforcement (XX) and which are joined together by spacers (Ci, Di), each element being connected to an adjacent element by a bar (Ri) located substantially at the centers of the transverse strips (Ai, Bi-1), characterized in that the spacers (Ci, Di) and the bars (Ri) are inclined with respect to the mean longitudinal direction of the reinforcement (XX) but at opposite angles, two spacers (Ci, Di) of the same element being located in planes parallel to the plane of symmetry of the reinforcement and anti-parallel to a plane parallel to the base of the U of each element.

2. Reinforcement according to claim 1, characterized in that a first spacer (Ci) connecting two strips (A, B) forming an element is provided between the end of a first strip (Bi) and an intermediate zone of a second strip (Ai+l), and a second spacer (Di) of the element is provided between an end of the second strip (Ai+1) and an intermediate portion of the first strip (Bi)

3. Reinforcement according to claim 2, characterized in that in plan view, before the reinforcement has been formed, the blank (1) constituting the reinforcement resembles the shape of two Ns connected together by their legs (j) and symmetrical about a point in the mean plane (XX) of the reinforcement.

4. Reinforcement according to any of the preceding claims, characterized in that the angles of inclination of the bars (Ri) and the spacers (C, D) to the longitudinal axis (XX) of the reinforcement are of the order of 30°.

5. A blank of metal or other material of similar mechanical properties, particularly its tension-compression and bending moment, shaped so as to form, after bending, reinforcement according to any of the preceding claims, said blank being in the form of pairs of strips (Ai, Bi) joined by spacers to form elements connected together by bars parallel to one another, characterized in that said spacers, which are parallel to one another, are inclined to the longitudinal direction of the strips and in that the bars (Ri) are also inclined to that longitudinal direction, but in the opposite sense to the spacers.

6. A blank according to claim 5, in which said strips (A, B) are substantially rectangular in outline, characterized in that bars (Ri) make an angle of the order of 30° with the mean longitudinal axis (XX) of the blank (1).

7. A sealing gasket or strip, for use particularly in the motor industry, and in particular for the manufacture of a guide, a slide, a motor vehicle window or mirror bottom wipe-seal,...etc, characterized in that it includes reinforcement according to any one of claims 1 to 4.
